# FASCICULE DE BREVET EUROPEEN

(11) **EP 0 791 763 B1**
(45) Date de publication et mention de la délivrance du brevet: **24.04.2002**
(21) Numéro de dépôt: 97400422.8
(22) Date de dépôt: 26.02.1997
(51) Int. Cl.: F16D 13/64, F16D 69/04

(54) **Disque porte-garnitures de friction pour embrayage mécanique**
Reibbelag-Trägerplatte für mechanische Kupplung
Friction pad carrier disc for mechanical clutch

(30) Priorité: 26.02.1996 FR 9602347
(43) Date de publication de la demande: 27.08.1997
(73) Titulaire: VALEO, 75017 Paris (FR)
(72) Inventeur: Duriez, Alain, 80136 Rivery (FR); Carpentier, Pierre, 95230 Soisy/Montmorency (FR); Travers, Jean-Luc, 80700 Andechy (FR)
(74) Mandataire: Gamonal, Didier

(56) Documents cités:
- FR-A- 2 370 893
- GB-A- 379 504
- GB-A- 380 598
- GB-A- 520 406
- US-A- 2 117 527

## Description

La présente invention concerne un disque porte-garnitures de friction pour embrayage mécanique, ce disque comportant dans sa région périphérique, entourant sa partie centrale, des premières et secondes zones de fixation globalement parallèles au plan de ladite partie centrale, d'une part pour une première garniture de friction annulaire ou divisée en plots, destinée à entrer en contact de frottement avec le plateau de pression de l'embrayage, d'autre part pour une seconde garniture de friction également annulaire ou divisée en plots, destinée à entrer en contact de frottement avec le plateau de réaction de cet embrayage, selon le préambule de la revendication 1.

Ladite région périphérique du disque peut être annulaire et continue, mais elle est couramment fractionnée en pales radiales portant les zones de fixation précitées, ces pales étant reliées à la partie centrale du disque par un pied et servant alternativement à la fixation de la première garniture et à la fixation de la seconde garniture. Les pales peuvent être d'un seul tenant avec la partie centrale du disque, ou lui être reliées par des rivets. Les pales destinées à assurer la fixation d'une garniture peuvent avoir une forme différente de celle des pales destinées à assurer la fixation de l'autre garniture, et ces formes peuvent en elles-mêmes être très variées, en fonction de l'effet recherché ou des impératifs de la fabrication.

Des exemples de pales de ces différents types sont fournis dans le document EP-A-0 579 554. Pour augmenter la rigidité de la fixation des garnitures de friction et pour obtenir une usure plus régulière de ces garnitures, sans incrustations, il est fréquent, et c'est le cas dans le document précité, de prévoir sur chaque pale, par exemple de part et d'autre de sa zone de fixation sur la garniture concernée, des zones de portée supplémentaires décalées vers l'autre garniture et pouvant servir d'appui à celle-ci.

Ceci étant, la fonction d'un tel disque appartient à un disque de friction pour embrayage mécanique, dont l'application trouve bien entendu sa plus grande extension dans le domaine de l'automobile, est suffisamment connue du technicien de ce domaine pour n'avoir pas besoin d'être décrite en détail. Il suffira de rappeler que lorsque la pédale d'embrayage est relâchée, les deux garnitures du disque sont solidarisées en rotation par frottement avec le plateau de pression et le plateau de réaction, lequel est entraîné par le vilebrequin du moteur. Le disque porte-garnitures entraîne alors, directement ou par l'intermédiaire de ressorts, un voile engrené avec un moyeu central lui-même en prise avec l'arbre d'entrée de la boîte de vitesses, qui se trouve par suite entraîné par le vilebrequin. Un tel fonctionnement est rappelé dans la demande PCT/FR94/00297 (WO.94/21934), en même temps qu'une grande variété de formes de pales radiales.

Quel que soit le mode de réalisation adopté pour le disque porte-garnitures, des échauffements excessifs peuvent s'y produire par suite d'opérations alternées d'embrayage et de débrayage, lorsque plusieurs démarrages en côte se succèdent rapidement, surtout si l'automobile est très chargée ou tire une remorque. Il peut en résulter des déformations tendant à écarter les garnitures l'une de l'autre (bâillement), ce qui empêche une complète libération du disque de friction par rapport aux plateaux de pression et de réaction lors du débrayage, et entraîne une usure et un échauffement supplémentaires des garnitures.

Pour remédier à cet inconvénient, on a proposé dans la demande de brevet français publiée n° 2 600 732 (page 6, lignes 5 à 10) de prévoir, entre les garnitures, des crochets coopérants qui s'opposent aux déformations tendant à écarter les deux garnitures l'une de l'autre, et empêchent donc que ces garnitures ne "lèchent" les plateaux de pression et de réaction, avec le résultat néfaste indiqué plus haut.

Cette disposition présente cependant un autre inconvénient, qui est d'augmenter radialement la dimension du disque porte-garnitures, du fait que ces crochets possèdent des parties en saillie à l'extérieur du bord de sa région périphérique. L'inertie du disque est également augmentée du fait de l'augmentation de poids que représente le poids des crochets, occupant de surcroît la région périphérique du disque. En outre, cette solution n'est pas toujours envisageable, notamment dans le cas des disques décrits dans le document PCT mentionné plus haut.

Dans le document GB-A-520,406 (figures 17 et 18), avant réalisation de la fixation desdites garnitures sur lesdites zones de fixation, chacune de ces dernières, au moins d'un côté du disque, se situe par fabrication en retrait par rapport à une zone d'appui environnante prévue pour la garniture correspondant à ce côté.

De la sorte, ces zones de fixation seront soumises à une précontrainte, dès lors que la fixation de la garniture correspondante sur la région périphérique du disque sera réalisée.

En pratique plusieurs zones de fixation sont prévues, chaque pale présentant d'un côté une zone de fixation pour l'une des garnitures et de l'autre côté une zone de fixation pour l'autre garniture. Ces zones de fixation, de faible étendue, sont reliées entre elles par une partie inclinée délimitée par un pied de pale.

Circonférentiellement une grande distance existe entre une zone de fixation et sa zone d'appui environnante associée.

Chaque zone d'appui est reliée à l'autre zone de fixation pour l'autre garniture par un pan incliné d'orientation transversale.

Il en résulte que la fabrication des pales par emboutissage n'est pas aussi simple que souhaitée et qu'à cause de la configuration des pales, l'on maîtrise mal le retrait des zones d'appui par rapport à leurs zones d'appui environnantes.

Dans le document GB-A-379 504, il est décrit un disque porte-garnitures de friction pour embrayage mécanique conforme au préambule de la revendication 1.

Dans ce document, chacune des pales comporte des premières et secondes zones de fixation et d'appui respectivement pour les premières et secondes garnitures en sorte que l'étendue des zones de fixation de l'une des garnitures est particulièrement réduite.

Ainsi ces zones de fixation appartiennent à des languettes découpées dans les autres zones de fixation dans le plan de la partie centrale en sorte que le retrait est mal contrôlé car ces languettes ont une faible zone d'appui.

La présente invention a pour objet d'éviter, de manière simple et économique, les inconvénients de la technique antérieure.

C'est donc un but de l'invention de bien maîtriser le retrait des zones de fixation par rapport aux zones d'appui environnantes, sans augmenter la dimension radiale du disque porte-garnitures ainsi que son inertie.

C'est encore un but de l'invention de faciliter l'emboutissage du disque porte-garnitures.

Conformément à l'invention, ces problèmes sont résolus par la partie caractérisante de la revendication 1.

Grâce à l'invention les zones de fixation pour l'une des garnitures de friction d'un côté du disque, se situent axialement en retrait par rapport aux zones d'appui environnantes prévues pour la garniture de friction correspondant à ce côté du disque en sorte que les zones de fixation peuvent avoir une grande étendue et que l'on maîtrise bien ledit retrait.

Ledit retrait peut être donc faible et bien contrôlé.

Grâce à l'invention une précontrainte suffisante est obtenue même pour un retrait très faible - de l'ordre de quelques dixièmes de mm - de la zone de fixation par rapport à la zone d'appui environnante de la même garniture. Cette précontrainte s'oppose à la déformation à chaud du disque et évite le bâillement précité des garnitures de friction, même lors d'un échauffement excessif du disque porte-garnitures par suite d'embrayages répétitifs. Ce résultat favorable peut s'expliquer par le fait que la déformation à chaud, due à la dilatation différentielle entre le métal du disque (acier) et le matériau des garnitures, peut être contrée par la précontrainte due au faible cambrage des zones de fixation.

En tout cas, l'invention présente l'avantage de pouvoir s'appliquer aux disques porte-garnitures, avec des moyens de fixation variés des garnitures sur les zones de fixation de ces pales : rivetage, collage, rivetage et collage. L'outillage pour la fabrication du disque n'a pas à subir de profonde modification ; le disque ne comporte aucune pièce supplémentaire, et son inertie n'est pas augmentée, de même que ses dimensions radiales.

En outre le cambrage des pales et des languettes peut être effectué axialement dans le même sens ce qui simplifie la fabrication et l'emboutissage des pales et/ou languettes.

Avantageusement la garniture de friction correspondante est constituée par la seconde garniture destinée à entrer en contact de frottement avec le plateau de réaction. Les zones de fixation concernées subissent alors moins de déformations dans les conditions extrêmes du fait que le plateau de réaction se déforme moins que le plateau de pression.

Différents modes d'exécution de l'invention vont maintenant être décrits à titre d'exemples nullement limitatifs avec référence aux figures du dessin ci-annexé dans lequel :
- la figure 1 est une vue de face partielle de la région périphérique d'un disque porte-garnitures de friction comportant des pales radiales pour la fixation des garnitures, ces pales servant alternativement à la fixation de ladite première garniture et de ladite seconde garniture ;
- la figure 2 représente des vues en coupe par les lignes II-II et II'-II' de la figure 1, ramenées dans le même plan et montrant le cambrage des pales avant réalisation de la fixation des garnitures ;
- la figure 3 est une vue correspondante des pales après réalisation de cette fixation, l'une au moins de ces pales étant alors soumise à une précontrainte.

Il y a lieu tout d'abord de noter que pour mieux faire comprendre l'invention, le cambrage des pales, c'est-à-dire le retrait des zones de fixation par rapport à la zone d'appui environnante de la même pale a été fortement exagéré par rapport aux autres dimensions des pales.

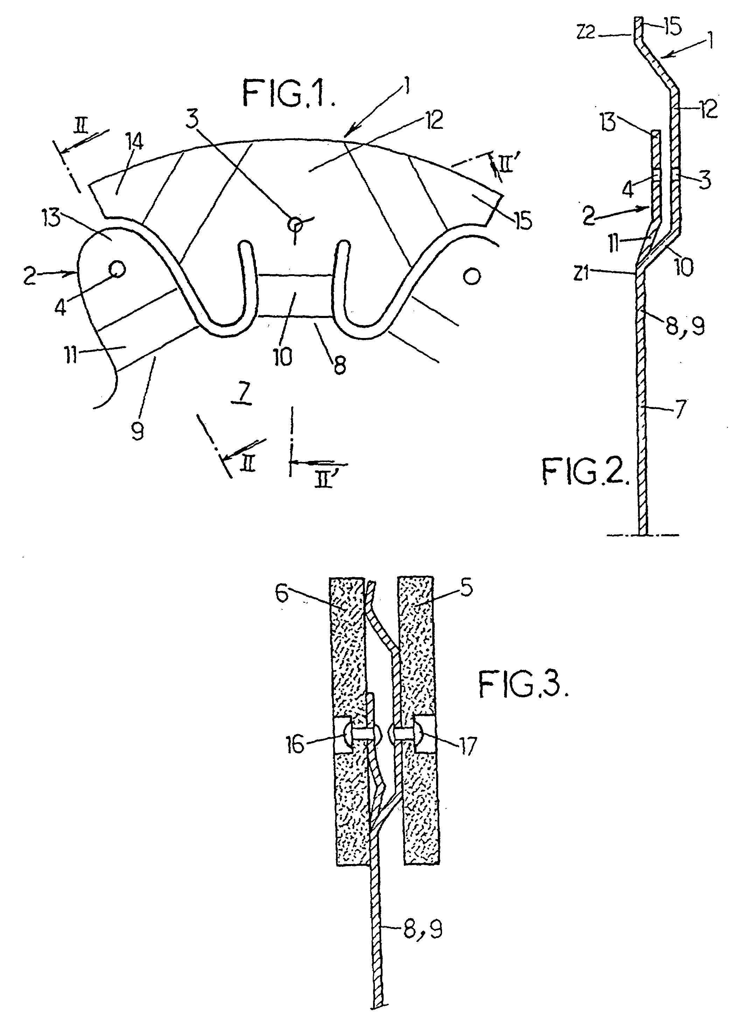

Dans les figures 1 à 3, la région périphérique du disque porte alternativement des premières pales larges 1 et des secondes pales plus étroites ou languettes 2, percées de trous de rivets 3 et 4 et destinées à assurer la fixation des garnitures, respectivement de la première garniture de friction 5 destinée à entrer en contact avec le plateau de pression et de la seconde garniture de friction 6 destinée à entrer en contact avec le plateau de réaction (non représentés). Ces premières et secondes pales 1, 2 sont reliées d'un seul tenant à la partie centrale 7 du disque, respectivement par des premiers et seconds pieds 8, 9 qui portent de manière simple et économique des premiers et seconds pans 10, 11 inclinés axialement selon l'invention dans le même sens, obtenus par un pliage et un contre-pliage. De la sorte, on peut réaliser sur les premières et secondes pales des premières et secondes zones de fixation pour les garnitures, respectivement une première zone 12 sur les premières pales 1 pour la fixation de la première garniture (ou des plots de garniture) 5, et une seconde zone de fixation 13 sur les secondes pales 2 pour la fixation de la seconde garniture (ou des plots de garniture) 6, ces zones de fixation 12, 13, avant montage des garnitures 5, 6, étant globalement parallèles à la partie centrale 7 du disque (figure 2).

Les premiers et seconds pans 10, 11 sont tangentiels car ils s'étendent perpendiculairement à l'axe de symétrie radial respectivement des premières pales larges 1 et des secondes pales étroites 2.

Chaque première pale large 1 est une pale du type tripode comme décrit dans les documents EP-A-0 579 554 et WO-A-94/21 934 précités. Chaque première pale 1 comporte donc, d'une part, à sa périphérie externe trois zones de portée à savoir la première zone centrale de fixation 12 et deux zones de portées périphériques supplémentaires 14, 15, et, d'autre part, à sa périphérie interne une zone de portée à savoir la première zone centrale de fixation 12. Des pans inclinés (non référencés), obtenus par pliage et contre pliage, relient la zone centrale de fixation 12 à chaque zone de portée supplémentaire. Ces pans s'étendent obliquement par rapport à l'axe de symétrie radiale de la première pale 1 et convergent au-delà de la périphérie externe de la première pale 1 en sorte que les pans obliques ont une forme de V à sommet tronqué.

Les zones de portées supplémentaires 14 et 15 s'étendent ici dans le plan de la partie centrale 7 du disque.

Dans ce mode de réalisation, l'invention se caractérise par le fait que la seconde zone de fixation 13 des secondes pales 2 est en retrait axialement par rapport à la zone d'appui environnante prévue pour la seconde garniture de friction 6 considérée. La zone d'appui environnante pour cette seconde garniture 6 est ici constituée d'une part par la zone de jonction Z1 entre le second pan incliné 11 et le second pied de liaison 9, et d'autre part par l'appui Z2 que fourniront à la garniture 6 les zones de portée supplémentaires 14 et 15 de la première pale 1.

Après fixation de la seconde garniture (ou de plots de garniture) 6 sur les secondes zones de fixation 13 des secondes pales 2, grâce à des rivets références en 16, on voit sur la figure 3 que les secondes pales 2 seront soumises à une précontrainte, avec l'effet technique mentionné plus haut, empêchant ou diminuant fortement l'écartement des premières et secondes garnitures, respectivement 5 et 6, l'une de l'autre sous l'effet d'un échauffement du disque porte-garnitures.

Quant à la première garniture 5, elle pourra être fixée, par des rivets référencés en 17, sur les premières zones de fixation 12 de la première pale plus large 1, et l'on voit sur cette figure que les zones de portée supplémentaires 14 et 15 de cette première pale 1 constitueront un appui supplémentaire pour la seconde garniture 6, ceci d'une façon connue en soi dans la technique antérieure rappelée au début.

Dans le mode de réalisation qui vient d'être décrit, on a vu que le cambrage des premières et secondes pales pouvait être effectué axialement dans le même sens, avec un cambrage des premières pales 1 plus important que celui des secondes pales 2, seules celles-ci étant toutefois précontraintes, après fixation de la seconde garniture 6.

Il est à noter que la fixation par rivets pourrait être remplacée par un collage, ou s'accompagner d'un tel collage, avec le même effet.

On comprendra aussi, d'après ce qui précède, que la forme des pales et/ou languettes pourra être très variable.

En particulier les dispositions décrites dans les documents EP-A-0 579 554 et WO-A-94/21 934 sont envisageables.

Ainsi les secondes pales 2 peuvent être plus larges et comporter des zones de portées supplémentaires à leur périphérie externe comme par exemple dans les figures 6 à 9 du document WO-A-94/21 934.

Toutes les formes de languettes et de pales tripodes de document WO-A-94/21 934 sont envisageables.

En effet dans ce document les languettes sont dans le plan de la partie centrale 7 du disque.

Selon l'invention on effectue axialement un retrait de ces secondes pales ou languettes par rapport à ladite partie centrale 7 à l'aide des pans tangentiels 11. Les secondes pales 2 et les premières pales tripodes 1 s'étendent donc d'un même côté de la partie centrale du disque, les premières zones centrales de fixation 12 des pales étant axialement plus éloignées de ladite partie centrale 7. Il suffit donc dans le document WO-A-94/21 934 d'affecter les languettes d'un pan. Ainsi les languettes peuvent être transformées en pales.

Bien entendu on peut inverser les structures et décaler axialement les zones de fixation des secondes pales 2 et des premières pales 1 dans l'autre sens par rapport à la partie centrale 7 du disque porte-garnitures de friction.

Dans ce cas les secondes pales servent à la fixation de la première garniture de friction 5 et les premières pales 1 à la fixation de la seconde garniture de friction 6.

## Revendications

1. Disque porte-garnitures de friction pour embrayage mécanique, ce disque comportant dans sa région périphérique entourant sa partie centrale (7), des premières et secondes zones de fixation (12, 13) globalement parallèles au plan de ladite partie centrale (7), d'une part pour la fixation d'une première garniture de friction annulaire ou divisée en plots (5) du premier côté de la région périphérique, et d'autre part pour la fixation d'une seconde garniture de friction également annulaire ou divisée en plots (6) du second côté de la région périphérique, dans lequel ladite région périphérique est divisée en pales et/ou languettes (1, 2) reliées d'un seul tenant à la partie centrale (7) par des pieds de liaison (8, 9) et pourvues des premières et secondes zones de fixation zones de fixation (12, 13), seules les secondes zones de fixation (13) étant, avant fixation des garnitures (5, 6), en retrait par rapport à des zones de portées supplémentaires (14, 15) ou d'appui (Z2) environnantes, solidaires des premières zones de fixation (12) et prévues pour la seconde garniture (6), **caractérisé en ce que** les secondes zones de fixation (13) sont, avant fixation des garnitures (5, 6), en retrait par rapport à des zones d'appui (Z1) prévues pour la seconde garniture (6) et constituées par les zones de jonction (Z1) entre les pales et/ou languettes (1,2) et leurs pieds de liaison (8, 9).

2. Disque selon la revendication 1, **caractérisé en ce que** lesdites pales et/ou languettes (1, 2) comportent des premières pales (1) pourvues de premières zones (12), du premier côté de la région périphérique, pour la fixation de la première garniture (5) et des secondes pales (2) pourvues de secondes zones (13), du second côté de la périphérique pour la fixation de la seconde garniture (6).

3. Disque selon la revendication 2, **caractérisé en ce que** la région périphérique comporte alternativement des premières pales (1) et des secondes pales (2).

4. Disque selon la revendication 2 ou 3, **caractérisé en ce que** les premières pales (1) sont des pales larges et les secondes pales (2) sont plus étroites.

5. Disque selon la revendication 2 ou 3, **caractérisé en ce que** les premières pales (1) sont reliées à la partie centrale (7) par des premiers pieds (8) qui portent des premiers pans (10) inclinés axialement.

6. Disque selon la revendication 5, **caractérisé en ce que** les zones de portées supplémentaires (14, 15) sont des portées ménagées à la périphérie externe des premières pales (1), et **en ce que** chaque première pale comporte à sa périphérie externe, deux zones de portée périphériques (14, 15) situées de part et d'autre d'une première zone de fixation et reliée à celle-ci par des pans inclinés s'étendant obliquement par rapport à l'axe de symétrie radial de ladite pale et convergeant au-delà de la périphérie externe de celle-ci.

7. Disque selon la revendication 5, **caractérisé en ce que** les secondes pales (2) sont reliées à la partie centrale (7) par des seconds pieds (9) qui portent des seconds pans (11) inclinés axialement dans le même sens que les premiers pans (10) solidaires des premières zones de fixation (12) et **en ce que** lesdits premiers et seconds pans (10, 11) s'étendent perpendiculairement à l'axe de symétrie radial respectivement des premières pales (1) et des secondes pales (2).

8. Disque selon l'une quelconque des revendications précédentes, **caractérisé en ce que** les zones de portées supplémentaires (14, 15) s'étendent dans le plan de ladite partie centrale (7).

9. Disque selon l'une quelconque des revendications précédentes, **caractérisé en ce que** la fixation des garnitures (5, 6 ; 23, 25) sur ladite région périphérique est assurée par des rivets (16, 17 ; 24, 24' ) et/ou par collage.

## Claims

1. A friction liner support disc for a mechanical clutch, the said disc including, in its peripheral region surrounding its central portion (7), first and second fastening zones (12, 13) which are generally parallel to the plane of the said central portion (7), firstly for fastening on the first side of the peripheral region a first friction liner (5) which is annular or divided into pads, and secondly for fastening on the second side of the peripheral region a second friction liner which is also annular or divided into pads (6), wherein the said peripheral region is divided into blades and/or tongues (1, 2) which are joined integrally to the central portion (7) by means of connecting feet (8, 9) and which are provided with first and second fastening zones (12, 13), with only the second fastening zones (13) being, before fastening of the liners (5, 6) is effected, in a withdrawn relationship with neighbouring supplementary engagement zones (14, 15) or abutment zones (Z2), which are fixed with respect to the first fastening zones (12) and provided for the second liner (6), **characterised in that** the second fastening zones (13) are, before the liners (5, 6) are fastened, in a withdrawn relationship with abutment zones (Z1) which are provided for the second liner (6) and which consist of the junction zones (Z1) between the blades and/or tongues (1, 2) and their connecting feet (8, 9).

2. A disc according to Claim 1, **characterised in that** the said blades and/or tongues (1, 2) comprise first blades (1) formed with first zones (12) on the first side of the peripheral region, for fastening the first liner (5), and second blades (2) formed with second zones (13) on the second side of the peripheral region, for fastening the second liner (6).

3. A disc according to Claim 2, **characterised in that** the peripheral region comprises first blades (1) and second blades (2) arranged alternately with each other.

4. A disc according to Claim 2 or Claim 3, **characterised in that** the first blades (1) are wide blades and the second blades (2) are narrower.

5. A disc according to Claim 2 or Claim 3, **characterised in that** the first blades (1) are joined to the central portion (7) through first feet (8) which carry first panels (10) inclined axially.

6. A disc according to Claim 5, **characterised in that** the supplementary engagement zones (14, 15) are surfaces formed at the outer periphery of the first blades (1), and **in that** each first blade comprises at its outer periphery two peripheral engagement zones (14, 15) situated on either side of a first fastening zone and joined to the latter through inclined panels which extend obliquely with respect to the axis of radial symmetry of the said blade, and which converge beyond the outer periphery of the latter.

7. A disc according to Claim 5, **characterised in that** the second blades (2) are joined to the central portion (7) through second feet (9) which carry second panels (11), inclined axially in the same direction as the first panels (10) fixed to the first fastening zones (12), and **in that** the said first and second panels (10, 11) extend at right angles to the axis of radial symmetry of the first blades (1) and second blades (2) respectively.

8. A disc according to any one of the preceding Claims, **characterised in that** the supplementary engagement zones (14, 15) lie in the plane of the said central portion (7).

9. A disc according to any one of the preceding Claims, **characterised in that** the fastening of the liners (5, 6; 23, 25) on the said peripheral region is obtained by means of rivets (16, 17; 24, 24') and/or by adhesive bonding.

## Patentansprüche

1. Reibbeläge tragende Scheibe für eine mechanische Kupplung, wobei diese Scheibe in ihrem ihren Mittelteil (7) umgebenden Umfangsbereich zur Ebene des besagten Mittelteils (7) insgesamt parallele erste und zweite Befestigungsstellen (12, 13) einerseits zur Befestigung eines ringförmigen oder in Reibplättchen unterteilten ersten Reibbelags (5) auf der ersten Seite des Umfangsbereichs und andererseits zur Befestigung eines ringförmigen oder in Reibplättchen unterteilten zweiten Reibbelags (6) auf der zweiten Seite des Umfangsbereichs umfaßt, wobei der besagte Umfangsbereich in Segmente und/oder Zungen (1, 2) unterteilt ist, die einstückig mit dem Mittelteil (7) durch Verbindungsfüße (8, 9) verbunden und mit ersten und zweiten Befestigungsstellen (12, 13) versehen sind, wobei nur die zweiten Befestigungsstellen (13) vor der Befestigung der Reibbeläge (5, 6) bezogen auf zusätzliche, umgebende Lagerstellen (14, 15) oder Auflagestellen (Z2) zurückversetzt sind, die fest mit den ersten Befestigungsstellen (12) verbunden und für den zweiten Reibbelag (6) vorgesehen sind, **dadurch gekennzeichnet, daß** die zweiten Befestigungsstellen (13), vor der Befestigung der Reibbeläge (5, 6), bezogen auf Auflagestellen (Z1) zurückversetzt sind, die für den zweiten Reibbelag (6) vorgesehen sind und aus den Übergangsstellen (Z1) zwischen den Segmenten und/oder Zungen (1, 2) und ihren Verbindungsfüßen (8, 9) bestehen.

2. Scheibe nach Anspruch 1, **dadurch gekennzeichnet, daß** die besagten Segmente und/oder Zungen (1, 2) erste Segmente (1), die mit ersten Befestigungsstellen (12) auf der ersten Seite des Umfangsbereichs für die Befestigung des ersten Reibbelags (5) versehen sind, und zweite Segmente (2) umfassen, die mit zweiten Befestigungsstellen (13) auf einer zweiten Seite des Umfangs für die Befestigung des zweiten Reibbelags (6) versehen sind.

3. Scheibe nach Anspruch 2, **dadurch gekennzeichnet, daß** der Umfangsbereich abwechselnd erste Segmente (1) und zweite Segmente (2) umfaßt.

4. Scheibe nach Anspruch 2 oder 3, **dadurch gekennzeichnet, daß** die ersten Segmente (1) breite Segmente und die zweiten Segmente (2) schmalere Segmente sind.

5. Scheibe nach Anspruch 2 oder 3, **dadurch gekennzeichnet, daß** die ersten Segmente (1) mit dem Mittelteil (7) durch erste Füße (8) verbunden sind, die erste axial geneigte Teilstücke (10) tragen.

6. Scheibe nach Anspruch 5, **dadurch gekennzeichnet, daß** die zusätzlichen Lagerstellen (14, 15) am äußeren Umfang der ersten Segmente (1) angeordnete Lagerstellen sind und daß jedes erste Segment an seinem äußeren Umfang zwei Umfangslagerstellen (14, 15) umfaßt, die sich beiderseits einer ersten Befestigungsstelle befinden und mit dieser durch geneigte Teilstücke verbunden sind, die sich im Verhältnis zur radialen Symmetrieachse des besagten Segments schräg erstrecken und jenseits des äußeren Umfangs dieses Segments zusammenlaufen.

7. Scheibe nach Anspruch 5, **dadurch gekennzeichnet, daß** die zweiten Segmente (2) mit dem Mittelteil (7) durch zweite Füße (9) verbunden sind, die zweite Teilstücke (11) tragen, die axial in der gleichen Richtung wie die fest mit den ersten Befestigungsstellen (12) verbundenen ersten Teilstücke (10) geneigt sind, und daß sich die besagten ersten und zweiten Teilstücke (10, 11) senkrecht zur radialen Symmetrieachse der ersten Segmente (1) bzw. der zweiten Segmente (2) erstrecken.

8. Scheibe nach einem der vorangehenden Ansprüche, **dadurch gekennzeichnet, daß** sich die zusätzlichen Lagerstellen (14, 15) in der Ebene des besagten Mittelteils (7) erstrecken.

9. Scheibe nach einem der vorangehenden Ansprüche, **dadurch gekennzeichnet, daß** die Befestigung der Reibbeläge (5, 6; 23, 25) auf dem besagten Umfangsbereich durch Niete (16, 17; 24, 24') und/oder durch Verklebung erfolgt.
